# EUROPÄISCHE PATENTSCHRIFT

(11) **EP 3 497 002 B1**
(45) Veröffentlichungstag und Bekanntmachung des Hinweises auf die Patenterteilung: **02.12.2020**
(21) Anmeldenummer: 17735088.1
(22) Anmeldetag: 30.06.2017
(51) Int. Cl.: B62J 6/02, B60Q 1/04, B62J 17/02

(54) **TOLERANZAUSGLEICHSRAHMEN FÜR FUGE UM SCHEINWERFER**
TOLERANCE COMPENSATION FRAME AROUND HEAD BEAM
CADRE POUR COMPENSATION LE JEU AUTOUR LE PHARE

(30) Priorität: 11.08.2016 DE 102016214979
(43) Veröffentlichungstag der Anmeldung: 19.06.2019
(73) Patentinhaber: Bayerische Motoren Werke Aktiengesellschaft, 80809 München (DE)
(72) Erfinder: OTTILLINGER, Klaus, 86508 Rehling (DE)
(86) Internationale Anmeldenummer: PCT/EP2017/066240
(87) Internationale Veröffentlichungsnummer: WO 2018/028879

(56) Entgegenhaltungen:
- EP-A1- 2 332 812
- EP-A2- 0 869 052
- JP-B2- 4 339 525
- US-A- 4 356 536

## Beschreibung

Die Erfindung betrifft einen Toleranzausgleichsrahmen zur mittelbaren Montage und Justage von Motorradverkleidungselementen um eine Motorradleuchte.

Aus dem Stand der Technik sind bereits verschiedenste Methoden und Ausführungsformen von Mitteln zur Montage von Motorradverkleidungselementen im Frontbereich an der Scheinwerfersektion bekannt. Dabei ist es für das optische Erscheinungsbild wichtig, dass die Verkleidungselemente gleichmäßige Spaltmaße zum Scheinwerfer bzw. zu der Motorradleuchte aufweisen. Insbesondere die Spaltmaße links und rechts der Leuchte sind hierbei für ein optisch ansprechendes und symmetrisches Erscheinungsbild von Bedeutung. Das Einstellen dieser Spaltmaße gestaltet sich jedoch bei den meisten der bekannten Methoden und Mitteln als umständlich, zeitaufwändig und schwierig. Zumeist müssen die einzelnen Abstände jedes Verkleidungselements zu einander und zu dem Scheinwerfer einzeln und von Hand angepasst werden. Da in der Produktion jedoch schlanke Prozessschritte vorgezogen werden und diese günstig, schnell und im Ergebnis gut sein müssen, eignen sich viele der Methoden und Mittel aus dem Stand der Technik nicht. Methoden die einen Toleranzausgleich direkt an den Verkleidungsmitteln vorsehen, sind ebenfalls meist ungeeignet, da später oft die Mittel zum Toleranzausgleich sichtbar bleiben. Beispielsweise Langlöcher als Mittel zum Toleranzausgleich an den Verkleidungsteilen liefern ein optisch wenig ansprechendes Erscheinungsbild. Desweiteren ist bei herkömmlichen Methoden und Mitteln oft Nacharbeit nötig, was investierte Zeit und damit Kosten erhöht.

Verschiedene Rahmen zur Aufnahme einer Motorradleuchte sind beispielsweise aus den Dokumenten US 4 356 536 A, EP 2 332 812 A1, und EP 0 869 052 A2 bekannt. Wobei das Dokument JP 4 339525 B2 die Merkmale der Präambel des Anspruchs zeigt.

Der Erfindung liegt deshalb die Aufgabe zugrunde, vorbesagte Nachteile zu überwinden und eine einfache, kostengünstige Lösung bereitzustellen, welche die Montage und das Einstellen der Fugenmaße gegenüber herkömmlichen Lösungen erleichtert und beschleunigt.

Diese Aufgabe wird durch die Merkmalskombination gemäß Patentanspruch 1 (Vorrichtung) und 10 (Verfahren) gelöst.

Erfindungsgemäß wird hierzu eine Toleranzausgleichsvorrichtung zur mittelbaren Montage und Justage zumindest eines Motorradverkleidungselements um eine Motorradleuchte an einem Motorradrahmenelement vorgeschlagen.

Das Motorradrahmenelement wird dabei integral von einem Motorradrahmen ausgebildet, der als Träger für weitere Baugruppen dient oder das Motorradrahmenelement wird am Motorradrahmen angeordnet und/oder befestigt.

Das Motorradverkleidungselement bildet zumindest zwei Flächen aus. Eine Verbindungsfläche die zur Verbindung mit dem Toleranzausgleichsrahmen dient und eine Ableitfläche, die dem Ableiten von Luft und dem Schutz eines Fahrers dient. Die Motorradleuchte kann beispielsweise sowohl Scheinwerfer als auch eine integrale Anordnung mehrerer Elemente umfassen. Die Toleranzausgleichsvorrichtung umfasst dabei einen Toleranzausgleichsrahmen, der durch einen ersten Satz an Befestigungsmitteln in einem Teilmontagezustand in eine Toleranzausgleichsrichtung verschieblich gegenüber dem Motorradrahmenelement befestigt ist. Dies geschieht durch eine erste vorbestimmte Stellung der Befestigungsmittel des ersten Satzes an Befestigungsmitteln. Ein Spaltmaß zwischen der Motorradleuchte und dem Toleranzausgleichsrahmen wird dann im Teilmontagezustand gleichmäßig eingestellt. Hierzu wird eine Lehre verwendet. Der Toleranzausgleichsrahmen ist durch den ersten Satz an Befestigungsmitteln in einem Endmontagezustand unverschieblich gegenüber dem Motorradrahmenelement befestigt. Im Endmontagezustand befinden sich die Befestigungselemente des ersten Satzes an Befestigungselementen in einer zweiten vorbestimmten Stellung. Das zumindest eine Motorradverkleidungselement ist durch einen zweiten Satz an Befestigungsmitteln an dem Toleranzausgleichsrahmen befestigbar oder befestigt.

Eine vorteilhafte Weiterbildung sieht vor, dass eine Abdeckeinheit an dem Toleranzausgleichsrahmen durch einen dritten Satz an Befestigungsmitteln befestigbar und in dem Endmontagezustand befestigt ist. Die Abdeckeinheit überdeckt in dem Endmontagezustand die ersten und zweiten Sätze an Befestigungsmitteln und zumindest einen Teil des zumindest einen Motorradverkleidungselements und zumindest einen Teil des Toleranzausgleichsrahmens. Der Abdeckeinheit kommt dabei die Aufgabe zu, Befestigungselemente und Stellen die nicht in einem Sichtbereich liegen sollen zu überdecken und eine optisch Ansprechende Oberfläche zu bieten. Zeitgleich stellt das Abdeckelement einen Schutz gegen lösen der abgedeckten Elemente und vor Wettereinflüssen dar.

Eine weitere vorteilhafte Weiterbildung sieht vor, dass jeweils ein Befestigungsmittel des dritten Satzes an Befestigungsmitteln einen, von der Abdeckeinheit ausgebildeten, Rasthaken und eine, von dem Toleranzausgleichsrahmen ausgebildete, Rastlasche umfasst. Dabei ist der Rasthaken ausgebildet in die Rastlasche einzurasten. Dadurch sind die Befestigungsmittel so ausgebildet, dass sie von einer Seite nicht sichtbar sind und das optische Erscheinungsbild im Endmontagezustand nicht stören, da die Abdeckeinheit nicht von beispielsweise einem Loch durchbrochen ist.

Ebenfalls von Vorteil ist es für eine Ausführungsform, wenn das Motorradrahmenelement zumindest eine Lasche ausbildet. Jede Lasche formt jeweils ein Verschiebungsmittel aus. Die Lasche bietet zudem eine Anschlagsfläche gegen die der Toleranzausgleichsrahmen im Endmontagezustand durch den ersten Satz an Befestigungsmitteln gepresst wird, wobei alle Anschlagsflächen in einer Ebene liegen und eine gemeinsame Anschlagsfläche aufspannen. Im Teilmontagezustand ist der Toleranzausgleichsrahmen parallel zu der Anschlagsfläche verschieblich.

Von Vorteil ist eine Weiterbildungsvariante, bei der das jeweilige Verschiebungsmittel ein Langloch ist. Das Langloch ist entlang der Toleranzausgleichsrichtung ausgerichtet. Dadurch, dass das Langloch jeder Lasche in die Toleranzausgleichsrichtung ausgerichtet ist, ist eine Verschiebung nur in Toleranzausgleichsrichtung möglich. Alternativ wäre auch, statt eines Langlochs, ein in seinem Durchmesser gegenüber einem Befestigungselement des ersten Satzes an Befestigungselementen vergrößertes Loch möglich, wodurch eine Verschiebung in jede Richtung parallel zu einer gemeinsamen Anschlagsfläche der Laschen ermöglicht wird.

Weiter ist es für eine Ausführungsvariante von Vorteil, wenn der Toleranzausgleichsrahmen im Wesentlichen ringförmig ausgebildet ist. Der Toleranzausgleichsrahmen bildet ferner über zumindest einen Abschnitt seines Umfangs eine orthogonal zu einer Rotationsachse des Toleranzausgleichsrahmens und/oder parallel zu der gemeinsamen Anschlagsfläche der Laschen gerichtete Befestigungsfläche aus, welche zumindest ein Loch ausbildet. Das Loch dient dazu, den Befestigungsmitteln des ersten Satzes an Befestigungsmitteln eine Durchführung zu bieten, Ein Teil eines Befestigungsmittels des ersten Satzes an Befestigungsmitteln liegt dabei flächig auf der Befestigungsfläche an.

Weiter ist es für eine Ausführungsvariante von Vorteil, wenn ein Befestigungsmittel des ersten und zweiten Satzes an Befestigungsmitteln jeweils eine Schraube und eine Mutter umfasst. Jeweils eine Schraube des ersten Satzes an Befestigungselementen reicht im Teilmontagezustand und im Endmontagezustand durch das Verschiebungsmittel, beispielsweise das Langloch, einer Lasche und durch das Loch einer Befestigungsfläche. Im Teilmontagezustand ist die Mutter so aufgeschraubt, dass noch keine Presskraft zwischen Lasche und Befestigungsfläche bzw. Toleranzausgleichsrahmen ausgeübt wird. Im Endmontagezustand, ist die Mutter mit einer vorbestimmten Kraft auf der Schraube aufgeschraubt, sodass eine Presskraft zwischen Lasche und Befestigungsfläche bzw. Toleranzausgleichsrahmen ausgeübt wird, wodurch der Toleranzausgleichsrahmen gegenüber dem Motorradrahmenelement unverschieblich ist. Erster und zweiter Satz an Befestigungsmitteln kann ferner weitere Elemente wie Beilagscheiben, Abstandshalter oder Schraubensicherungen umfassen.

Ferner ist eine Weiterbildungsvariante vorteilhaft, bei der der Toleranzausgleichsrahmen die Motorradleuchte zumindest teilweise umgibt. Eine, dem Toleranzausgleichsrahmen am nächten liegende, Außenfläche der Motorradleuchte weist einen Abstand zu einer, der Motorradleuchte am nächsten liegenden, Innenfläche des Toleranzausgleichsrahmens auf, wobei ein erstes Maß des Abstands entlang der Toleranzausgleichsrichtung, auf einer Seite der Motorradleuchte, ein erstes Spaltmaß und ein zweites Maß des Abstands entlang der Toleranzausgleichsrichtung, auf einer gegenüberliegenden Seite der Motorradleuchte, ein zweites Spaltmaß ist und erstes und zweites Spaltmaß vorzugsweise gleich sind.

Eine Weiterbildungsform, bei der der Toleranzausgleichsrahmen zumindest eine Befestigungslasche zur Befestigung des zumindest einen Motorradverkleidungselements ausbildet, ist ebenfalls vorteilhaft. Das zumindest eine Motorradverkleidungselement ist dann mit dem zweiten Satz an Befestigungsmitteln an dem Toleranzausgleichsrahmen befestigbar.

Erfindungsgemäß wird weiter ein Verfahren zur Montage von Verkleidungselementen an einem Motorrad zur Realisierung bestimmungsgemäßer und gleicher Spaltmaße unter Verwendung einer Toleranzausgleichsvorrichtung vorgeschlagen, wobei das Verfahren zur Montage die folgenden Schritte umfasst:
a) Montieren des Toleranzausgleichsrahmens an dem Motorradrahmenelement an dem die Motorradleuchte montiert ist, wodurch der Teilmontagezustand hergestellt wird.
b) Ausrichten bzw. Justieren des Toleranzausgleichsrahmens auf dem Motorradrahmenelement in eine vorbestimmte Position, vorzugsweise derart, dass die Spaltmaße im Wesentlichen gleich sind und/oder die Motorradleuchte gegenüber dem Toleranzausgleichsrahmen ein symmetrisches Erscheinungsbild bietet.
c) Festlegen der Lage des Toleranzausgleichsrahmens auf dem Motorradrahmenelement durch Fixieren der Befestigungselemente des ersten Satzes an Befestigungselementen, sodass der Toleranzausgleichsrahmen unverschieblich auf dem Motorradrahmenelement fixiert ist. Bei einer Schraubenverbindung als ein jeweiliges Befestigungselement des ersten Satzes an Befestigungselementen wird die Schraube mit einer vorbestimmten Kraft gegen die Mutter verspannt, welche dadurch die Befestigungsflächen am Toleranzausgleichsrahmen und die Laschen des Motorradrahmenelements gegeneinanderpressen.
d) Montieren des zumindest einen Motorradverkleidungselements mit dem zweiten Satz an Befestigungsmitteln an dem Toleranzausgleichsrahmen,
e) Endmontieren der Abdeckeinheit durch Fixieren der Abdeckeinheit mit dem dritten Satz an Befestigungselementen auf dem Toleranzausgleichsrahmen.

Diese Schritte können gegebenenfalls auch in anderer Reihenfolge ausgeführt werden.

Die vorstehend offenbarten Merkmale sind beliebig kombinierbar soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Explosionszeichnung der Toleranzausgleichsvorrichtung,
- Fig. 2: eine perspektivische Darstellung des Toleranzausgleichsrahmens mit Motorradleuchte und Motorradrahmenelement,
- Fig. 3: eine perspektivische Ansicht der Toleranzausgleichsvorrichtung im Endmontagezustand.

Die Figuren sind beispielhaft schematisch. Gleiche Bezugszeichen in den Figuren weisen auf gleiche funktionale und/oder strukturelle Merkmale hin.

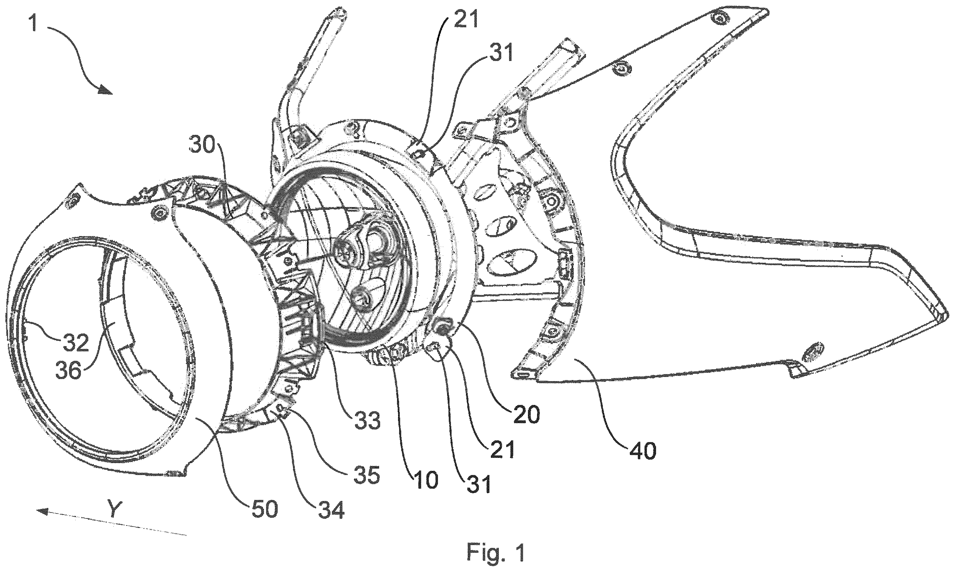

In Figur 1 ist die Toleranzausgleichsvorrichtung 1 dargestellt. Zu sehen ist das Motorradrahmenelement 20 mit der montierten Motorradleuchte 10. Davon explosionsartig beabstandet ist ein Motorradverkleidungselement 40, ein Toleranzausgleichsrahmen 30 und eine Abdeckeinheit 50 dargestellt. Das Motorradrahmenelement 20 ist als ein im Wesentlichen torusförmingen und C-förmigen Rahmen für die Motorradleuchte 10 ausgebildet, wobei vom torusförmigen Teil des Motorradrahmenelements 20 die Laschen 21 zur Befestigung des Toleranzausgleichsrahmens 30 ausgebildet werden oder über eine Verbindung, wie z. B. einer Schweißverbindung, verbunden sind. Die Laschen 21 weißen jeweils ein Langloch in der Toleranzausgleichsrichtung Y erstreckend auf. Abhängig von der Länge der Langlöcher ist der spätere mögliche Verschiebeweg entlang der Toleranzausgleichsrichtung Y. Das Motorradrahmenelement 20 bildet ferner Fortsätze aus, an denen das Motorradverkleidungselement 40 im Endmontagezustand anliegt. Die Motorradleuchte 10 ist an dem Motorradrahmenelement 20 montiert, wobei das Motorradrahmenelement 20 die Motorradleuchte 10 teilweise umgibt und die C-Form des Motorradrahmenelements 20 durch die Montagemittel, mit denen die Motorradleuchte 10 an dem Motorradrahmenelement 20 montiert ist, geschlossen wird. Der Toleranzausgleichsrahmen 30 hat eine im Wesentlichen ringförmige Form, wobei er zumindest eine Befestigungsfläche 34 an seinem, dem Motorradrahmenelement zugewandten, Ende ausbildet, welche sich nach außen vom Toleranzausgleichsrahmen 30 weg erstreckt und orthogonal zu einer Zentralachse des Toleranzausgleichsrahmens 30 ist. Der Toleranzausgleichsrahmen bildet eine Innenfläche 36 auf seiner Innenseite aus, welche im Teilmontagezustand und im Endmontagezustand die der Motorradleuchte 10 nächstliegende Fläche bildet. Zwischen der Außenfläche des Toleranzausgleichsrahmens 30 und der Befestigungsfläche 34 erstreckt sich mehrere Verstärkungsrippen und die Fläche bildet ein Loch 35 aus. Ferner werden von dem Toleranzausgleichsrahmen 30 weitere Flächen mit Löchern ausgebildet, an denen durch den zweiten Satz an Befestigungsmitteln die Motorradverkleidungselemente 40 befestigbar sind. Diese weiteren Flächen besitzen jeweils eine Schlitzung parallel zu der Zentralachse des Toleranzausgleichsrahmens 30 zu beiden Seiten eines jeweiligen Lochs der weiteren Flächen. Dadurch wird eine Federung erzielt, die eine leichtere Montage und einen besseren Sitz der Motorradverkleidungselemente 40 ermöglicht. Die Motorradverkleidungselemente 40 bilden hierfür zwei Flächen aus, eine Verbindungsfläche und eine Ableitfläche. Die Verbindungsfläche, die zur Verbindung mit dem Toleranzausgleichsrahmen 30 dient, bildet hierfür zumindest ein Loch aus. Die Ableitfläche, die dem Ableiten von Luft und dem Schutz eines Fahrers dient, ist zudem ein wesentliches Designelement des Motorrads. Die Abdeckeinheit 50 bildet einen Abschluss der Konstruktion. Der dritte Satz an Befestigungselementen ist daher so ausgeformt, dass er von außen nicht sichtbar ist. Für die Montage rastet daher zumindest ein Rasthaken 32 der Abdeckeinheit 50 in eine Rastlasche 33 des Toleranzausgleichsrahmens 30 ein. Dabei werden ein erster und zweiter Satz an Befestigungsmitteln von der Abdeckeinheit 50 überdeckt und so vor äußeren Einflüssen und Sichtbarkeit geschützt. Die Abdeckeinheit 50 bildet mit seiner äußeren Kontur einen Abschluss zu den Motorradverkleidungselementen 40 und zu einer Windschutzscheibe. Mit seiner Innenkontur werden die sichtbaren Spaltmaße der Motorradleuchte 10 bestimmt. Da die Position der Abdeckeinheit 50 gegenüber dem Toleranzausgleichring durch den dritten Satz an Befestigungselementen festgelegt ist, ist das Verhältnis der Spaltmaße des Toleranzausgleichsrahmens 30 zu der Motorradleuchte 10 untereinander identisch mit dem Verhältnis der Spaltmaße der Abdeckeinheit 50 zu der Motorradleuchte 10. Daher bleibt die Symmetrie der Spaltmaße erhalten.

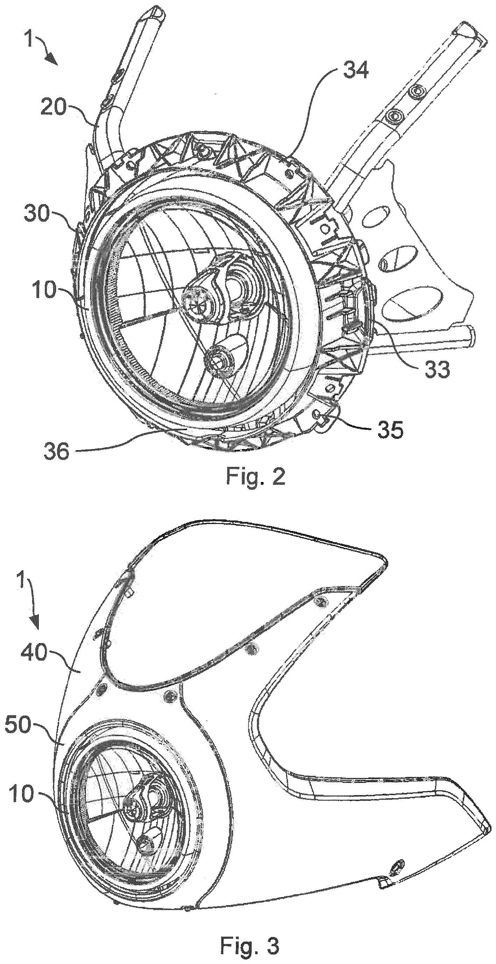

Figur 2 zeigt einen Teil der Toleranzausgleichsvorrichtung 1. Im Wesentlichen, ist das Motorradrahmenelement 20 mit Motorradleuchte 10 und dem darauf aufgebrachten und ausgerichteten Toleranzausgleichsrahmen 30 dargestellt. Zwischen der Innenfläche 36 des Toleranzausgleichsrahmens 30 und der Umfangsfläche der Motorradleuchte 10 besteht dabei, zumindest in Ausgleichsrichtung Y, links und rechts der Motorradleuchte 10 der gleiche Abstand, also ein identisches Spaltmaß. Die dargestellten Teile entsprechen dabei in ihrer weiteren Ausgestaltung der in Figur 1 beschriebenen Form.

Figur 3 zeigt den Endmontagezustand bei dem die Motorradleuchte 10 von dem Toleranzausgleichsrahmen 30 umgeben ist, an dem zwei Motorradverkleidungselemente 40, eines links und eins rechts der Motorradleuchte 10, montiert sind. Die Bereiche in denen die Sätze an Befestigungselementen sich befinden werden von der Abdeckeinheit 50 abgedeckt. Zwischen der Innenkontur der Abdeckeinheit 50 und der Motorradleuchte 10 besteht links und rechts der Motorradleuchte 10, also in Ausgleichsrichtung Y ein identisches Spaltmaß.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise, jedoch nicht erfindungsgemäß, könnte der Toleranzausgleichsrahmen nicht an dem Motorradrahmenelement befestigt und/oder befestigbar sein, sondern an der Motorradleuchte.

## Patentansprüche

1. Toleranzausgleichsvorrichtung (1) zur mittelbaren Montage und Justage zumindest eines Motorradverkleidungselements (40) um eine Motorradleuchte (10) an einem Motorradrahmenelement (20), umfassend
einen Toleranzausgleichsrahmen (30), der durch einen ersten Satz an Befestigungsmitteln (31) in einem Teilmontagezustand in eine Toleranzausgleichsrichtung (Y) verschieblich gegenüber dem Motorradrahmenelement (20) befestigt ist, wobei
der Toleranzausgleichsrahmen (30) durch den ersten Satz an Befestigungsmitteln (31) in einem Endmontagezustand unverschieblich gegenüber dem Motorradrahmenelement (20) befestigt ist, **dadurch gekennzeichnet dass**
das zumindest eine Motorradverkleidungselement (40) durch einen zweiten Satz an Befestigungsmitteln an dem Toleranzausgleichsrahmen (30) befestigbar oder befestigt ist.

2. Toleranzausgleichsvorrichtung (1) nach Anspruch 1, **dadurch gekennzeichnet, dass** eine Abdeckeinheit (50) an dem Toleranzausgleichsrahmen (30) durch einen dritten Satz an Befestigungsmitteln befestigbar und in dem Endmontagezustand befestigt ist, wobei die Abdeckeinheit (50) in dem Endmontagezustand die ersten und zweiten Sätze an Befestigungsmitteln, zumindest einen Teil des zumindest einen Motorradverkleidungselements (40) und zumindest einen Teil des Toleranzausgleichsrahmens (30) überdeckt.

3. Toleranzausgleichsvorrichtung (1) nach Anspruch 2, **dadurch gekennzeichnet, dass** jeweils ein Befestigungsmittel des dritten Satzes an Befestigungsmitteln einen, von der Abdeckeinheit (50) ausgebildeten, Rasthaken (32) und eine, von dem Toleranzausgleichsrahmen (30) ausgebildete, Rastlasche (33) umfasst.

4. Toleranzausgleichsvorrichtung (1) nach einem der vorhergehenden Ansprüche 1 bis 3, **dadurch gekennzeichnet, dass** das Motorradrahmenelement (20) zumindest eine Lasche (21) ausbildet, wobei die zumindest eine Lasche (21) jeweils ein Verschiebungsmittel ausformt.

5. Toleranzausgleichsvorrichtung (1) nach Anspruch 4, **dadurch gekennzeichnet, dass** das jeweilige Verschiebungsmittel ein Langloch ist, wobei das Langloch entlang der Toleranzausgleichsrichtung (Y) ausgerichtet ist.

6. Toleranzausgleichsvorrichtung (1) nach einem der vorhergehenden Ansprüche 1 bis 5, **dadurch gekennzeichnet, dass** der
Toleranzausgleichsrahmen (30) im Wesentlichen ringförmig ausgebildet ist,
wobei der Toleranzausgleichsrahmen (30) über zumindest einen Abschnitt seines Umfangs eine orthogonal zu einer Rotationsachse des Toleranzausgleichsrahmens (30) gerichtete Befestigungsfläche (34) ausbildet, welche zumindest ein Loch (35) ausbildet.

7. Toleranzausgleichsvorrichtung (1) nach einem der vorhergehenden Ansprüche 1 bis 6, **dadurch gekennzeichnet, dass** ein Befestigungsmittel des ersten und zweiten Satzes an Befestigungsmitteln jeweils eine Schraube und eine Mutter umfasst.

8. Toleranzausgleichsvorrichtung (1) nach einem der vorhergehenden Ansprüche 1 bis 7, **dadurch gekennzeichnet, dass** der Toleranzausgleichsrahmen (30) die Motorradleuchte (10) zumindest teilweise umgibt, wobei eine, dem Toleranzausgleichsrahmen (30) am nächten liegende, Außenfläche der Motorradleuchte (10) einen Abstand zu einer, der Motorradleuchte (10) am nächsten liegenden, Innenfläche (36) des Toleranzausgleichsrahmens (30) aufweist und wobei ein erstes Maß des Abstands entlang der Toleranzausgleichsrichtung (Y), auf einer Seite der Motorradleuchte (10), ein erstes Spaltmaß und ein zweites Maß des Abstands entlang der Toleranzausgleichsrichtung (Y), auf einer gegenüberliegenden Seite der Motorradleuchte (10), ein zweites Spaltmaß ist und erstes und zweites Spaltmaß vorzugsweise gleich sind.

9. Toleranzausgleichsvorrichtung (1) nach einem der vorhergehenden Ansprüche 1 bis 8, **dadurch gekennzeichnet, dass** der Toleranzausgleichsrahmen (30) zumindest eine Befestigungslasche zur Befestigung des zumindest einen Motorradverkleidungselements (40) ausbildet.

10. Verfahren zur Montage von Verkleidungselementen an einem Motorrad zur Realisierung bestimmungsgemäßer und gleicher Spaltmaße unter Verwendung einer Toleranzausgleichsvorrichtung (1) nach einem der Ansprüche 2 bis 9, wobei das Verfahren zur Montage die folgenden Schritte umfasst:
a) Montieren des Toleranzausgleichsrahmens (30) an dem Motorradrahmenelement (20) an dem die Motorradleuchte (10) montiert ist, wodurch der Teilmontagezustand hergestellt wird,
b) Ausrichten des Toleranzausgleichsrahmens (30) auf dem Motorradrahmenelement (20) in eine vorbestimmte Position,
c) Festlegen der Lage des Toleranzausgleichsrahmens (30) auf dem Motorradrahmenelement (20) durch Fixieren der Befestigungselemente des ersten Satzes an Befestigungselementen (31), sodass der Toleranzausgleichsrahmen (30) unverschieblich auf dem Motorradrahmenelement (20) fixiert ist,
d) Montieren des zumindest einen Motorradverkleidungselements (40) mit dem zweiten Satz an Befestigungsmitteln (32) an dem Toleranzausgleichsrahmen (40),
e) Endmontieren der Abdeckeinheit (50) durch Fixieren der Abdeckeinheit (50) mit dem dritten Satz an Befestigungselementen (33) auf dem Toleranzausgleichsrahmen (30).

## Claims

1. Tolerance compensation arrangement having a tolerance compensation apparatus (1) for the indirect mounting and adjustment of at least one motorcycle trim element (40) around a motorcycle light (10) on a motorcycle frame element (20), comprising
a tolerance compensation frame (30) which is fastened by way of a first set of fastening means (31) such that it can be displaced with respect to the motorcycle frame element (20) in a tolerance compensation direction (Y) in a partially mounted state,
the tolerance compensation frame (30) being fastened by way of the first set of fastening means (31) such that it cannot be displaced with respect to the motorcycle frame element (20) in a final mounted state, **characterized in that**
the at least one motorcycle trim element (40) can be fastened or is fastened to the tolerance compensation frame (30) by way of a second set of fastening means.

2. Tolerance compensation arrangement having a tolerance compensation apparatus (1) according to Claim 1, **characterized in that** a covering unit (50) can be fastened, and is fastened in the final mounted state, to the tolerance compensation frame (30) by way of a third set of fastening means, the covering unit (50) covering the first and second sets of fastening means, at least one part of the at least one motorcycle trim element (40) and at least one part of the tolerance compensation frame (30) in the final mounted state.

3. Tolerance compensation arrangement having a tolerance compensation apparatus (1) according to Claim 2, **characterized in that** in each case one fastening means of the third set of fastening means comprises a latching hook (32) which is configured by the covering unit (50) and a latching lug (33) which is configured by the tolerance compensation frame (30).

4. Tolerance compensation arrangement having a tolerance compensation apparatus (1) according to one of the preceding Claims 1 to 3, **characterized in that** the motorcycle frame element (20) configures at least one lug (21), the at least one lug (21) forming in each case one displacement means.

5. Tolerance compensation arrangement having a tolerance compensation apparatus (1) according to Claim 4, **characterized in that** the respective displacement means is a slot, the slot being oriented along the tolerance compensation direction (Y).

6. Tolerance compensation arrangement having a tolerance compensation apparatus (1) according to one of the preceding Claims 1 to 5, **characterized in that** the tolerance compensation frame (30) is of substantially annular configuration,
the tolerance compensation frame (30) configuring, over at least one section of its circumference, a fastening face (34) which is directed orthogonally with respect to a rotational axis of the tolerance compensation frame (30) and configures at least one hole (35).

7. Tolerance compensation arrangement having a tolerance compensation apparatus (1) according to one of the preceding Claims 1 to 6, **characterized in that** a fastening means of the first and second set of fastening means comprises in each case a bolt and a nut.

8. Tolerance compensation arrangement having a tolerance compensation apparatus (1) according to one of the preceding Claims 1 to 7, **characterized in that** the tolerance compensation frame (30) at least partially surrounds the motorcycle light (10), an outer face of the motorcycle light (10), which outer face lies closest to the tolerance compensation frame (30), being at a spacing from an inner face (36) of the tolerance compensation frame (30), which inner face (36) lies closest to the motorcycle light (10), and a first dimension of the spacing along the tolerance compensation direction (Y), on one side of the motorcycle light (10), being a first gap size, and a second dimension of the spacing along the tolerance compensation direction (Y), on an opposite side of the motorcycle light (10) being a second gap size, and the first and second gap sizes preferably being identical.

9. Tolerance compensation arrangement having a tolerance compensation apparatus (1) according to one of the preceding Claims 1 to 8, **characterized in that** the tolerance compensation frame (30) configures at least one fastening lug for fastening the at least one motorcycle trim element (40).

10. Method for mounting trim elements on a motorcycle in order to realize intended and identical gap sizes with the use of a tolerance compensation apparatus (1) according to one of Claims 2 to 9, the method for mounting comprising the following steps:
a) mounting of the tolerance compensation frame (30) on the motorcycle frame element (20), on which the motorcycle light (10) is mounted, as a result of which the partially mounted state is established,
b) orienting of the tolerance compensation frame (30) on the motorcycle frame element (20) into a predefined position,
c) fixing of the position of the tolerance compensation frame (30) on the motorcycle frame element (20) by way of fixing of the fastening elements of the first set of fastening elements (31), with the result that the tolerance compensation frame (30) is fixed non-displaceably on the motorcycle frame element (20),
d) mounting of the at least one motorcycle trim element (40) on the tolerance compensation frame (40) by way of the second set of fastening means (32),
e) final mounting of the covering unit (50) by way of fixing of the covering unit (50) on the tolerance compensation frame (30) by way of the third set of fastening elements (33).

## Revendications

1. Agencement de compensation de tolérance pourvu d'un dispositif de compensation de tolérance (1) pour le montage et l'ajustement indirects d'au moins un élément d'habillage de motocyclette (40) autour d'un feu de motocyclette (10) sur un élément de cadre de motocyclette (20), comprenant :
un cadre de compensation de tolérance (30), qui est fixé par un premier ensemble de moyens de fixation (31) dans un état de montage partiel de manière à pouvoir se déplacer par rapport à l'élément de cadre de motocyclette (20) dans une direction de compensation de tolérance (Y),
le cadre de compensation de tolérance (30) étant fixé par le premier ensemble de moyens de fixation (31) dans un état de montage final de manière à ne pas pouvoir se déplacer par rapport à l'élément de cadre de motocyclette (20), **caractérisé en ce que**
ledit au moins un élément d'habillage de motocyclette (40) peut être fixé ou est fixé au cadre de compensation de tolérance (30) par un deuxième ensemble de moyens de fixation.

2. Agencement de compensation de tolérance pourvu d'un dispositif de compensation de tolérance (1) selon la revendication 1, **caractérisé en ce qu'**une unité de recouvrement (50) peut être fixée sur le cadre de compensation de tolérance (30) par un troisième ensemble de moyens de fixation et est fixée dans l'état de montage final, l'unité de recouvrement (50) recouvrant dans l'état de montage final les premier et deuxième ensembles de moyens de fixation, au moins une partie dudit au moins un élément d'habillage de motocyclette (40) et au moins une partie du cadre de compensation de tolérance (30).

3. Agencement de compensation de tolérance pourvu d'un dispositif de compensation de tolérance (1) selon la revendication 2, **caractérisé en ce qu'**un moyen de fixation du troisième ensemble de moyens de fixation comprend respectivement un crochet de crantage (32), formé par l'unité de recouvrement (50), et une languette de crantage (33), formée par le cadre de compensation de tolérance (30).

4. Agencement de compensation de tolérance pourvu d'un dispositif de compensation de tolérance (1) selon l'une quelconque des revendications 1 à 3 précédentes, **caractérisé en ce que** l'élément de cadre de motocyclette (20) forme au moins une languette (21), ladite au moins une languette (21) formant respectivement un moyen de déplacement.

5. Agencement de compensation de tolérance pourvu d'un dispositif de compensation de tolérance (1) selon la revendication 4, **caractérisé en ce que** le moyen de déplacement respectif est un trou longitudinal, le trou longitudinal étant orienté le long de la direction de compensation de tolérance (Y).

6. Agencement de compensation de tolérance pourvu d'un dispositif de compensation de tolérance (1) selon l'une quelconque des revendications 1 à 5 précédentes, **caractérisé en ce que** le cadre de compensation de tolérance (30) est configuré sous forme essentiellement annulaire, le cadre de compensation de tolérance (30) formant sur au moins une section de sa périphérie une surface de fixation (34) orientée orthogonalement à un axe de rotation du cadre de compensation de tolérance (30), qui forme au moins un trou (35).

7. Agencement de compensation de tolérance pourvu d'un dispositif de compensation de tolérance (1) selon l'une quelconque des revendications 1 à 6 précédentes, **caractérisé en ce qu'**un moyen de fixation du premier et deuxième ensemble de moyens de fixation comprend respectivement une vis et un écrou.

8. Agencement de compensation de tolérance pourvu d'un dispositif de compensation de tolérance (1) selon l'une quelconque des revendications 1 à 7 précédentes, **caractérisé en ce que** le cadre de compensation de tolérance (30) entoure au moins partiellement le feu de motocyclette (10), une surface extérieure du feu de motocyclette (10), la plus proche du cadre de compensation de tolérance (30), présentant un écart avec une surface intérieure (36) du cadre de compensation de tolérance (30), la plus proche du feu de motocyclette (10), et une première mesure de l'écart le long de la direction de compensation de tolérance (Y), sur un côté du feu de motocyclette (10), étant une première mesure de fente et une deuxième mesure de l'écart le long de la direction de compensation de tolérance (Y), sur un côté opposé du feu de motocyclette (10), étant une deuxième mesure de fente, et la première et la deuxième mesure de fente étant de préférence identiques.

9. Agencement de compensation de tolérance pourvu d'un dispositif de compensation de tolérance (1) selon l'une quelconque des revendications 1 à 8 précédentes, **caractérisé en ce que** le cadre de compensation de tolérance (30) forme au moins une languette de fixation pour la fixation dudit au moins un élément d'habillage de motocyclette (40).

10. Procédé de montage d'éléments d'habillage sur une motocyclette pour la réalisation de mesures de fente conformes et identiques, utilisant un dispositif de compensation de tolérance (1) selon l'une quelconque des revendications 2 à 9, le procédé de montage comprenant les étapes suivantes :
a) le montage du cadre de compensation de tolérance (30) sur l'élément de cadre de motocyclette (20) sur lequel le feu de motocyclette (10) est monté, l'état de montage partiel étant ainsi établi,
b) l'orientation du cadre de compensation de tolérance (30) sur l'élément de cadre de motocyclette (20) dans une position prédéterminée,
c) l'immobilisation de la position du cadre de compensation de tolérance (30) sur l'élément de cadre de motocyclette (20) par fixation des éléments de fixation du premier ensemble d'éléments de fixation (31), de telle sorte que le cadre de compensation de tolérance (30) soit fixé de manière à ne pas pouvoir se déplacer sur l'élément de cadre de motocyclette (20),
d) le montage dudit au moins un élément d'habillage de motocyclette (40) avec le deuxième ensemble de moyens de fixation (32) sur le cadre de compensation de tolérance (40),
e) le montage final de l'unité de recouvrement (50) par fixation de l'unité de recouvrement (50) avec le troisième ensemble d'éléments de fixation (33) sur le cadre de compensation de tolérance (30).
